# EUROPÄISCHE PATENTSCHRIFT

(11) **EP 3 861 902 B1**
(45) Veröffentlichungstag und Bekanntmachung des Hinweises auf die Patenterteilung: **06.09.2023**
(21) Anmeldenummer: 20205702.2
(22) Anmeldetag: 04.11.2020
(51) Int. Cl.: A47J 37/12

(54) **FRITTEUSE**
DEEP FAT FRYER
FRITTEUSE

(30) Priorität: 04.02.2020 DE 102020201328
(43) Veröffentlichungstag der Anmeldung: 11.08.2021
(73) Patentinhaber: OTECGO energieeffiziente Küchensysteme GmbH, 83080 Oberaudorf (DE)
(72) Erfinder: HIMPSL, Andreas, 83064 Raubling (DE)
(74) Vertreter: Kuhnen & Wacker Patent- und Rechtsanwaltsbüro PartG mbB

(56) Entgegenhaltungen:
- EP-A1- 0 263 084
- CH-A- 325 786
- CN-A- 110 074 691
- FR-A1- 2 588 740

## Beschreibung

Die Erfindung betrifft eine Fritteuse mit einem zur Aufnahme eines Frittieröls vorgesehenen Frittierbecken gemäß dem Oberbegriff des Anspruchs 1.

Eine derartige Fritteuse ist aus der DE 10 2009 049 259 B4 bekannt. In dieser Druckschrift ist eine Fritteuse beschrieben, die ein zur Aufnahme eines Frittieröls vorgesehenes Frittierbecken mit Seitenwänden und eine gegenüber der Horizontalen zu einer Kaltölzone hin geneigten Bodenwandung aufweist. Hierdurch bildet die Kaltölzone die tiefste Stelle im Frittierbecken und liegt auf einer Bedienseite der Fritteuse, die an einer Schmalseite der Fritteuse angeordnet ist. Die Beheizung des Frittierbeckens erfolgt hier durch eine Induktionsheizung, die bevorzugt eine Bodenwandung des Frittierbeckens mit einem Magnetfeld beaufschlagt.

In der EP 2 540 201 A1 ist eine ähnlich geformte Fritteuse beschrieben, die eine am Boden des Frittierbeckens angeordnete Heizkassette mit einem Ceranfeld aufweist, über das die Bodenwandung vollflächig beheizbar ist. Die Kaltölzone erstreckt sich hier entlang der Längsrichtung des Frittierbeckens entlang einer Seitenwandung. Die Bodenwandung ist demgemäß in Richtung auf eine Seitenwandung hin geneigt.

Bei derartigen Fritteusen sammelt sich vom Frittiergut abgesondertes Krümmelmaterial am Boden des Frittierbeckens, von wo es in eine sich der Bodenwandung anschließende Kaltölzone absinkt und bei der Reinigung der Fritteuse entnommen werden kann.

Der Erfindung liegt daher die Aufgabe zugrunde, eine Fritteuse der eingangs genannten Art zu schaffen, deren Bedienbarkeit, Haltbarkeit des Frittieröls, Reaktionszeit bei Temperaturabfall, und Aufheizzeit des Frittieröls verbessert sind, deren für einen optimalen Frittiervorgang notwendige Frittierölmenge reduziert ist und bei welcher der Transport von Krümmelmaterial oder von Schwebstoffen in einen Auffangbereich des Frittierbeckens, d.h. in eine Kaltölzone, verbessert ist.

Die Lösung dieser Aufgabe erfolgt durch eine Fritteuse gemäß Anspruch 1 dadurch, dass die Neigung der Bodenwandung gegenüber der Horizontalen kleiner gleich 10° beträgt und die Bodenwandung im Wesentlichen aus einer Glaskeramikplatte gebildet wird, die mittels einer flächig ausgebildeten elektrischen Widerstandsheizung beheizbar ist. Die Widerstandsheizung ist so ausgebildet, dass sie in Längsrichtung des Frittierbeckens einen Temperaturverlauf in der Glaskeramikplatte erzeugen kann, so dass im Betrieb der Widerstandsheizung die Temperatur in der Glaskeramikplatte mit dem Abstand von der Kaltölzone zunimmt.

In Ausführung der Erfindung kann der Temperaturverlauf in der Glaskeramikplatte linear verlaufen, das heißt, dass die Temperatur in der Glaskeramikplatte kontinuierlich und im Wesentlichen gleichförmig mit dem Abstand von der Kaltölzone zunimmt. Hierdurch ist die Temperatur in der Glaskeramikplatte, und damit die auf das Frittieröl übertragene Heizleistung, in dem von der Kaltölzone entfernten Bereich des Bodens des Frittierbeckens am höchsten. Deshalb bildet sich im Betrieb der erfindungsgemäßen Fritteuse eine kräftige, generell walzenförmige Konvektionsströmung im Frittieröl aus, die auf die Bedienseite der Fritteuse hin gerichtet ist. Im Bereich der Bedienseite wird die Strömung nach unten zur unbeheizten Kaltölzone hin abgelenkt, wo sie ihre mitgenommene Fracht von Krümmelmaterial und sonstigen Schwebestoffen in deren vertieften Sammelraum der Kaltölzone abladen kann.

Von der Kaltölzone aus steigt die Bodenwandung an und parallel dazu die Temperatur in Richtung auf den hinteren, von der Bedienseite der Fritteuse abgewandten Bereich. Durch die Zunahme der Temperatur in der Glaskeramikplatte in Richtung auf den hinteren Fritteusenbereich wird nicht nur die Ausbildung einer walzenförmigen Konvektionsströmung im Frittieröl erreicht, sondern im Betrieb der Fritteuse im Zusammenspiel mit der geneigten Bodenwandung begünstigt. Daher kommt die erfindungsgemäße Fritteuse mit einer relativ geringen Neigung der Bodenwandung gegenüber der Horizontalen aus, wodurch unter anderem die Tiefe des Fritteusenbeckens reduziert werden kann, bzw. die benötigte Frittierölmenge optimiert werden kann, da weniger nicht zum Frittieren nutzbares Frittierbeckenvolumen vorgehalten werden muss, im Vergleich zu stärker geneigten Bodenwandungen, die aus dem Stand der Technik bekannt sind.

In Ausführung der Erfindung kann der Temperaturverlauf im Wesentlichen auch stufenförmig verlaufen, wobei die einzelnen Wärmestufen gleichförmig oder mit zunehmendem Abstand zur Kaltölzone größer werden. Technisch ist dies dadurch realisierbar, dass die elektrische Widerstandsheizung mehrere Heizzonen aufweist, die separat in ihrer Heizleistung gesteuert werden können. Die einzelnen Heizzonen werden bevorzugt durch getrennte, flächige Heizelemente gebildet, deren generelle Form beispielsweise rechteckig und an die Breite des Frittierbeckens angepasst ist. Solche Heizelemente sind beispielsweise aus den üblichen Ceran-Kochfeldern bekannt. Zur Einstellung und Überwachung des gewünschten Temperaturverlaufes weist die Fritteuse eine Steuereinrichtung und zumindest einen Temperatursensor auf, mittels dessen Temperatursignal der Temperaturverlauf in der Glaskeramikplatte gesteuert werden kann. Dies geschieht bevorzugt durch die Steuerung der elektrischen Heizleistung von einem oder mehreren Heizelementen der Widerstandsheizung der Glaskeramikplatte.

Die Steuereinrichtung der Fritteuse ist in Ausführung der Erfindung bevorzugt elektronischer Art unter Einsatz eines Mikroprozessors mit einer Eingabe- sowie einer Anzeigevorrichtung. Da derartige Steuerungen allgemein bekannt sind, wird auf die Beschreibung weiterer Einzelheiten hierzu verzichtet.

In einer bevorzugten Ausbildung der Fritteuse weist diese weitere Sensoren auf, mit denen die Menge des Frittiergutes und/oder der Temperaturabfall bei Einbringen des Frittiergutes bestimmt werden können. Die so ermittelten Werte werden ebenfalls zur Steuerung der Widerstandsheizung herangezogen, so dass ein energetisch optimaler Betrieb der Fritteuse erzielbar ist. Weitere Sensoren können für die Messung der Konvektionsströmung, die Viskosität des Frittieröls und für dessen Trübung vorgesehen sein.

Bevorzugt ist in Ausführung der Erfindung weiter, dass die Seitenwände aus rostfreiem Stahl bestehen und derart ausgebildet sind, dass sie im Bereich der Bodenwandung Flansche ausbilden, an denen die Glaskeramikplatte zusammen mit der Widerstandsheizung und einer Bodenabdeckung befestigt werden kann. Die Verbindung dieser Bauteile mit dem Frittierbecken sollte flüssigkeitsdicht ausgebildet sein, wozu zwischen den Flanschen und der Glaskeramikplatte bevorzugt eine hitzebeständige Dichtung angeordnet ist. Die Glaskeramikplatte und die Bodenabdeckung sind bevorzugt mit den Flanschen der Seitenwände verschraubt, geklemmt oder verklebt.

Nützlich ist es, wenn ein Ablauf des Frittierbeckens mittig oder seitlich in der Kaltölzone oder seitlich an einer Seitenwand angrenzend an die Kaltölzone angeordnet ist, wobei die Bodenfläche der Kaltölzone bevorzugt zum Ablauf hin geneigt ist. Hierbei kann vor dem Ablauf ein Sieb und/oder stromabwärts des Ablaufs ein Filterelement angeordnet sein. Das Sieb kann in vorteilhafter Weise aus einem feinmaschigen Drahtgitter oder Drahtgeflecht bestehen und als Einsatz ausgebildet sein, der an die Form und die Dimensionen der Kaltölzone angepasst ist. Ein solches, generell korbartig ausgebildetes Sieb hält Krümel und größere Schwebstoffteilchen zurück. Es kann zusammen mit diesen Verunreinigungen des Frittieröls im Rahmen einer Wartung aus dem Frittierbecken entnommen werden.

Die Außenseite des Frittierbeckens kann bevorzugt eine Wärme-Isolierung aufweisen, was einer Energieersparnis förderlich ist. Diese Isolierung muss wärmefest sein, wofür beispielsweise mineralische Fasermaterialien in Frage kommen.

In Ausgestaltung der Erfindung kann die Fritteuse eine Warnsignalvorrichtung aufweisen, die nach einer vorbestimmten Zeit nach Einbringen des Frittiergutes, beispielsweise nach Ablauf der Garzeit, ein Warnsignal ausgibt.

In einer weiteren Ausführungsform kann die Fritteuse eine Umwälzvorrichtung mit einer Umwälzpumpe aufweisen, mit der in vorbestimmbaren Zeitintervallen oder durch manuelle Auslösung oder kontinuierlich, permanent während des Betriebs der Fritteuse Frittieröl aus dem Frittierbecken absaugbar ist und das Frittieröl über ein Filterelement dem Frittierbecken nach Reinigung und/oder Regenerierung wieder zuführbar ist. Hierfür kann in vorteilhafter Weise der in der Kaltölzone angeordnete Ablauf mit einem Filterelement verwendet werden, das beispielsweise in der Nähe oder an einer Ölauffangwanne angeordnet ist.

In Ausführung der Erfindung ist es bevorzugt, dass das Frittierbecken zumindest in vertikaler Richtung frei von Hinterschnitten und/oder Totzonen ist, die eine freie Konvektion des Frittieröls beeinträchtigen können.

Die Erfindung wird anschließend an Hand von Ausführungsbeispielen, die in den Figuren dargestellt sind, die jedoch den Erfindungsgedanken nicht darauf einschränken, noch näher erläutert. Es zeigen:
- Fig. 1: einen Querschnitt durch ein Frittierbecken gemäß der Erfindung;
- Fig. 2: ein Frittierbecken gemäß der Erfindung in einer perspektivischen Ansicht von schräg oben;
- Fig. 3: ein erfindungsgemäßes Frittierbecken von schräg unten gesehen;
- Fig. 4: zwei exemplarische Temperaturverläufe in der Glaskeramikplatte gemäß der Erfindung.

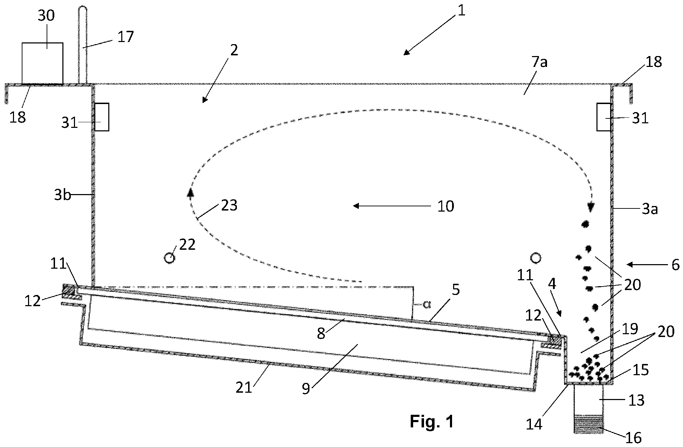

In Fig. 1 ist ein Querschnitt durch eine Fritteuse 1 mit einem Frittierbecken 2 gemäß der Erfindung dargestellt. Das Frittierbecken 2 hat hier beispielhaft eine generell rechteckige Form mit zwei Seitenwänden 3a, 3b, und zwei Längsseitenwänden 7a, 7b, von denen eine Seitenwand 3a als Schmalseite auf der Bedienseite 6 der Fritteuse 1 angeordnet ist. Die Bodenwandung 5 ist zur Bedienseite 6 der Fritteuse 1 hin gegenüber der Horizontalen unter einem Winkel α geneigt. Die Bodenwandung 5 reicht nicht ganz bis zur Seitenwand 3a auf der Bedienseite 6, sondern ein vertiefter Sammelraum 19 (Kaltölzone 4) schließt sich an sie an. Dieser Sammelraum 19 (Kaltölzone 4) dient zur Aufnahme von Schwebstoffen oder Krümelmaterial 20, die vom Frittiergut abgesondert werden und die durch die Maschen eines hier nicht gezeigten Einsatzkorbes für das Frittiergut in das Frittieröl ausgeschwemmt werden. Die Kaltölzone 4, bzw. der Sammelraum 19 erstreckt sich über die gesamte Breite der durch die Seitenwand 3a gebildeten Schmalseite des Frittierbeckens 2. Der Bereich des Sammelraumes 19 definiert auch die Kaltölzone 4 der Fritteuse 1. In dem Mittelbereich des Sammelraumes 19 befindet sich ein Ablauf 13, der zum Sammelraum 19 hin mit einem Sieb 15 abgeschlossen sein kann. An der Ausgangsseite stromabwärts des Ablaufs 13 ist exemplarisch ein Filterelement 16, beispielsweise in der Nähe einer Ölauffangwanne (nicht gezeigt), angeordnet, sowie ein hier nicht gezeigter Verschluss.

Die Bodenwandung 5 des Frittierbeckens 2 ist als offener Flansch 11 ausgebildet, wobei dessen Öffnung mit einer Glaskeramikplatte 8 abgeschlossen ist. Die Glaskeramikplatte 8 ist mittels der an ihr anliegenden Widerstandsheizung 9 beheizbar und über eine hitzebeständige Dichtung 12 mit dem Flansch 11 flüssigkeitsdicht verbunden. Eine hitzebeständige Bodenabdeckung 21, bevorzugt aus Edelstahl, schließt das Frittierbecken 2 nach unten hin ab und schützt die Widerstandsheizung 9 vor Beschädigung oder sonstigen schädlichen Einflüssen.

In den Längsseitenwänden 7a, 7b sind beispielhaft mehrere Auflagestifte 22 ausgebildet, für den hier nicht gezeigten Einsatzkorb für das Frittiergut. Sie verhindern, dass der Einsatzkorb zu tief in das Frittierbecken eintaucht. Auf der Oberseite des Frittierbeckens 2 ist ein Korbhalter 17 angeordnet, an dem ein mit Frittiergut befüllter Frittierkorb einhängbar ist. Die Fritteuse 1 wird üblicherweise in einem Trägergestell eingesetzt. Ein umlaufender Flansch 18 bildet den oberen Rand des Frittierbeckens 2. Dieser Flansch 18 dient dem Halt der Fritteuse 1 beim Einsatz in die Öffnung eines Unterbaus, etwa in einer Theke.

Sämtliche in Fig. 1 verwendeten Bezugszeichen werden auch in den nachfolgenden Figuren zur Bezeichnung gleicher baulicher Merkmale beibehalten.

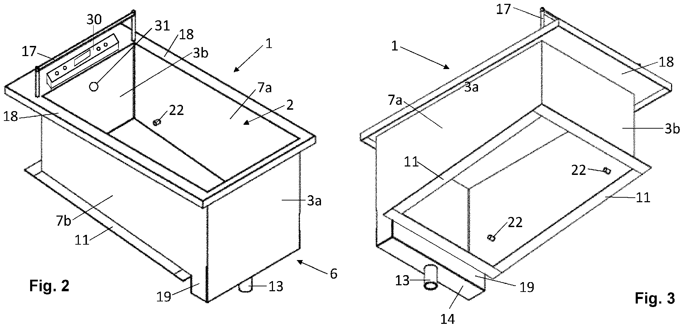

Die Fig. 2 zeigt ein Frittierbecken 2 gemäß der Erfindung in einer perspektivischen Ansicht von schräg oben. Das aus rostfreiem Stahl hergestellte Frittierbecken 2 ist von rechteckiger Form mit Seitenwänden 3a und 3b an den Schmalseiten sowie mit Längsseitenwänden 7a und 7b. Die obere Öffnung des Frittierbeckens 2 ist von einem umlaufenden Flansch 18 eingefasst, der beispielsweise durch Umbördeln oder Abkanten der Seiten- und Längswände erzeugt sein kann. An diesem Flansch 18 ist auch ein Korbhalter 17 zum Einhängen eines Frittiergutkorbes angeordnet.

Die unteren Endbereiche der Wände 3a, 3b und 7a, 7b sind abgekantet und bilden ebenfalls einen umlaufenden Flansch 11, der zur Befestigung der hier nicht sichtbaren Glaskeramikplatte 8 und der Widerstandsheizung 9 sowie ggfs. einer Bodenabdeckung ausgebildet ist. Im Bereich der vorderen Seitenwand 3a ist ein vertiefter Bereich angeordnet, der als Sammelraum 19 für das von der Konvektionsströmung 23 herangeführte Material dient, wie in Fig. 1 dargestellt ist. Dieses Material kann in einem hier nicht gezeigten Sieb 15 im Sammelraum 19 aufgefangen werden oder über den Ablauf 13 aus dem Frittierbecken 2 entfernt werden.

Die Höhe der Längsseitenwände 7a, 7b des Frittierbeckens 2 nimmt in Richtung auf die Bedienseite 6 der Fritteuse hin zu, so dass die Tiefe des Frittierbeckens 2 in Richtung auf die Bedienseite 6 hin größer wird. Der Boden des Frittierbeckens 2 fällt also zur vorderen Seitenwand 3a hin ab, wobei der Winkel gegen die Horizontale nicht größer als 10° ist.

Die Fig. 3 zeigt das Frittierbecken 2 gemäß Fig. 2 von schräg unten gesehen, wobei die Glaskeramikplatte 8, die Widerstandsheizung 9 und die zugehörige Bodenabdeckung 21 entfernt sind. Diese Bauteile sind im Betriebszustand am umlaufenden, ebenen Flansch 11 flüssigkeitsdicht befestigt.

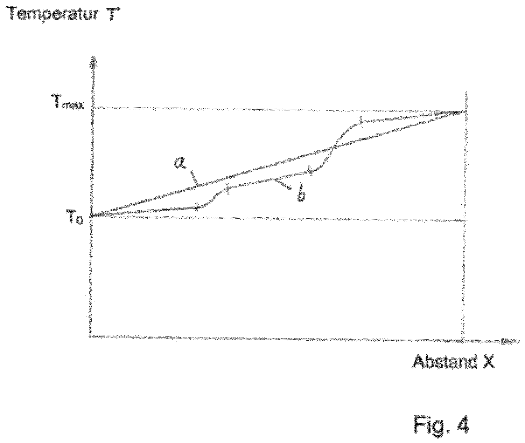

In Figur 4 sind zwei mögliche Temperaturverläufe in der beheizbaren Glaskeramikplatte 8 dargestellt. Der Abstand X bezeichnet den Abstand des jeweiligen Messpunktes für die Temperatur T in der Glaskeramikplatte 8 von der Kaltölzone 4. Xo entspricht hierbei dem der Kaltölzone benachbarten Anfangsbereich der Glaskeramikplatte und Xₘₐₓ deren Endbereich, der am weitesten von der Kaltölzone entfernt ist. Die Einheiten in dieser Darstellung sind willkürlich, da nur der generelle Verlauf der Temperatur in der Glaskeramikplatte gezeigt werden soll.

Der mit "a" bezeichnete Temperaturverlauf ist gemäß einem Ausführungsbeispiel der Erfindung linear. Die Temperatur steigt hier, ausgehend von einem untersten Wert To, gleichmäßig bis zu einem Maximalwert Tₘₐₓ an. Beide Temperaturwerte sind bevorzugt über die Steuerung der Heizleistung getrennt einstellbar, wobei die absoluten Werte gemäß der Beschaffenheit des Frittiergutes variabel sein können. Ein derartiger Temperaturverlauf ist beispielsweise technisch dadurch realisierbar, dass das Heizelement der Widerstandsheizung 9 mäanderförmig ausgebildet ist, wobei der Abstand der quer über die Glaskeramikplatte 8 verlaufenden Bereiche der Mäanderschlingen mit wachsendem Abstand von der Kaltölzone immer enger wird.

Der mit "b" bezeichnete Temperaturverlauf ist gemäß einem weiteren Ausführungsbeispiel der Erfindung im Wesentlichen "stufenförmig". Die "Stufen" sind hier nicht scharfkantig ausgebildet sondern zeigen einen abgerundeten Verlauf, da sich die benachbarten Heizbereiche wegen den Wärmeleitungseigenschaften der Glaskeramikplatte 8 gegenseitig beeinflussen.

Die Temperatur steigt auch gemäß der Kurve "b" von einer Minimaltemperatur T₀ ausgehend bis zu einem Maximalwert Tₘₐₓ an, wobei jedoch mehrere Stufenbereiche auftreten, an denen sich die Temperatur in der Glaskeramikplatte 8 rasch ändert. Die Höhen der einzelnen Stufen sind bevorzugt über die Steuerung der Widerstandsheizung 9 getrennt voneinander vorgebbar.

Bei dem gezeigten Ausführungsbeispiel "b" mit zwei Stufen besitzt die Widerstandsheizung 9 zumindest drei Heizelemente, die jeweils getrennt voneinander mit elektrischer Heizleistung beaufschlagt werden können. Die beiden der Kaltölzone 4 benachbarten Heizelemente sind hier mit verschiedener, aber deutlich geringerer Heizleistung versorgt als das dritte Heizelement, das am entgegengesetzten Ende der Glaskeramikplatte 8 liegt. Hierdurch ergibt sich der gezeigte gestufte Temperaturverlauf, bei dem die beiden Stufen eine verschiedene Höhe aufweisen. Die einzelnen Heizelemente der Widerstandsheizung 9 erstrecken sich jeweils nur über einen Teilbereich in Längsrichtung 10 der Glaskeramikplatte 8, jedoch bevorzugt über deren gesamte Breite. Die flächigen Heizelemente können ebenfalls als Mäander oder Heizstäbe mit unterschiedlicher Heizleistung ausgebildet sein, wobei deren quer verlaufende Bereiche gleich beabstandet sein können.

### Bezugszeichenliste

- 1: Fritteuse
- 2: Frittierbecken
- 3a,b: Seitenwände
- 4: Kaltölzone
- 5: Bodenwandung
- 6: Bedienseite
- 7a,b: Längsseitenwände
- 8: Glaskeramikplatte
- 9: Widerstandsheizung
- 10: Längsrichtung
- 11: Flansch
- 12: Dichtung
- 13: Ablauf
- 14: Bodenfläche der Kaltölzone
- 15: Sieb
- 16: Filterelement
- 17: Korbhaltebügel
- 18: Flansch
- 19: Sammelraum
- 20: Krümmelmaterial
- 21: Bodenabdeckung
- 22: Auflagestifte
- 23: Konvektionsströmung
- 30: Steuereinrichtung
- 31: Temperatursensor

- X: Abstand zur Kaltölzone

## Patentansprüche

1. Fritteuse (1) mit einem zur Aufnahme eines Frittieröls vorgesehenen Frittierbecken (2) mit Seitenwänden (3a, 3b) und Längsseitenwänden (7a, 7b) und einer gegenüber der Horizontalen zu einer Kaltölzone (4) hin geneigten Bodenwandung (5), sodass die Kaltölzone (4) die tiefste Stelle im Frittierbecken (2) bildet und auf einer Bedienseite (6) der Fritteuse (1) angeordnet ist, wobei die Bedienseite (6) an einer Schmalseite der Fritteuse (1) angeordnet ist, **dadurch gekennzeichnet, dass**
die Neigung der Bodenwandung (5) gegenüber der Horizontalen nicht größer als 10° ist und die Bodenwandung (5) im Wesentlichen aus einer Glaskeramikplatte (8) gebildet wird, die mittels einer flächig ausgebildeten elektrischen Widerstandsheizung (9) beheizbar ist, die in Längsrichtung (10) des Frittierbeckens (2) einen Temperaturverlauf in der Glaskeramikplatte (8) erzeugen kann, sodass im Betrieb der Widerstandsheizung (9) die Temperatur in der Glaskeramikplatte (8) mit dem Abstand von der Kaltölzone (4) ansteigt.

2. Fritteuse nach Anspruch 1, bei der der Temperaturverlauf im Wesentlichen linear verläuft.

3. Fritteuse nach Anspruch 1, bei der der Temperaturverlauf im Wesentlichen stufenförmig verläuft, wobei die einzelnen Wärmestufen gleichförmig oder mit zunehmendem Abstand zur Kaltölzone (4) größer werden.

4. Fritteuse nach einem der Ansprüche 1 bis 3, bei der die elektrische Widerstandsheizung (9) mehrere Heizzonen aufweist, die separat in ihrer Heizleistung gesteuert werden können.

5. Fritteuse nach einem der Ansprüche 1 bis 4, die zumindest einen Temperatursensor aufweist, mittels dessen Temperatursignal der Temperaturverlauf gesteuert werden kann.

6. Fritteuse nach einem der Ansprüche 1 bis 5, die Sensoren aufweist, mit denen die Menge des Frittiergutes und/oder der Temperaturabfall bei Einbringen des Frittiergutes bestimmt und die Werte zur Steuerung der Widerstandsheizung (9) herangezogen werden können.

7. Fritteuse nach einem der Ansprüche 1 bis 6, bei der die Seitenwände (3a, 3b) und die Längsseitenwände (7a, 7b) aus rostfreiem Stahl derart ausgebildet sind, dass sie im Bereich der Bodenwandung (5) Flansche (11) ausbilden, an denen die Glaskeramikplatte (8) zusammen mit der Widerstandsheizung (9) befestigt werden kann, wobei zwischen den Flanschen (11) und der Glaskeramikplatte (8) eine hitzebeständige Dichtung (12) angeordnet ist.

8. Fritteuse nach einem der vorherigen Ansprüche, bei der die Glaskeramikplatte (8) mit den Flanschen (11) der Seitenwände (3a, 3b) und der Längsseitenwände (7a, 7b) verschraubt, geklemmt oder verklebt ist.

9. Fritteuse nach einem der vorherigen Ansprüche, bei der ein Ablauf (13) des Frittierbeckens (2) mittig oder seitlich in der Kaltölzone (4) oder seitlich an einer Seitenwand (3a, 3b) an-grenzend an die Kaltölzone (4) angeordnet ist, wobei die Bodenfläche (14) der Kaltölzone (4) zum Ablauf (13) hin geneigt ist.

10. Fritteuse nach Anspruch 9, bei der vor dem Ablauf ein Sieb und/oder stromabwärts des Ablaufs (13) ein Filterelement (16) angeordnet ist.

11. Fritteuse nach einem der vorherigen Ansprüche, bei der die Außenseite des Frittierbeckens (2) eine Wärme-Isolierung aufweist.

12. Fritteuse nach einem der vorherigen Ansprüche, die eine Warnsignalvorrichtung aufweist, die nach einer vorbestimmten Zeit nach Einbringen des Frittiergutes ein Warnsignal ausgibt.

13. Fritteuse nach einem der vorherigen Ansprüche, die eine Umwälzvorrichtung mit einer Umwälzpumpe aufweist, mit der in vorbestimmbaren Zeitintervallen oder durch manuelle Auslösung oder kontinuierlich, permanent während des Betriebs Frittieröl aus dem Frittierbecken (2) absaugbar ist und das Frittieröl über ein Filterelement (16) dem Frittierbecken wie-der zuführbar ist.

14. Fritteuse nach einem der vorherigen Ansprüche, bei der das Frittierbecken (2) in vertikaler Richtung frei von Hinterschnitten und/oder Totzonen ist, die eine freie Konvektion des Frittieröls beeinträchtigen.

15. Fritteuse nach einem der vorherigen Ansprüche, bei der die Fritteuse (1) eine Steuereinrichtung (30) mit einem Mikroprozessor sowie mit zumindest einer Eingabeeinrichtung und einer Anzeigeeinrichtung aufweist, mit welcher zumindest der Temperaturverlauf in der Glas-keramikplatte (8) vorgegeben und gesteuert werden kann.

## Claims

1. Deep fryer (1) with a frying basin (2) provided for receiving a frying oil and having side walls (3a, 3b) and longitudinal side walls (7a, 7b) and a bottom wall (5) inclined relative to the horizontal towards a cold oil zone (4) so that the cold oil zone (4) forms the lowest point in the deep frying basin (2) and is arranged on an operating side (6) of the deep fryer (1), the operating side (6) being arranged on a short side of the deep fryer (1), **characterized in that**
the inclination of the bottom wall (5) with respect to the horizontal is not greater than 10° and the bottom wall (5) is formed essentially from a glass ceramic plate (8) which can be heated by means of an electrical resistance heater (9) which is designed in a planar manner and can generate a temperature profile in the glass ceramic plate (8) in the longitudinal direction (10) of the frying basin (2), so that, during operation of the resistance heater (9), the temperature in the glass ceramic plate (8) increases with the distance from the cold oil zone (4).

2. Deep fryer according to claim 1, wherein the temperature profile is substantially linear.

3. Deep fryer according to claim 1, in which the temperature profile is essentially step-shaped, wherein the individual heat steps are uniformly or increase in size with increasing distance from the cold oil zone (4).

4. Deep fryer according to any one of claims 1 to 3, in which the electric resistance heater (9) has a plurality of heating zones whose heating power can be controlled separately.

5. Deep fryer according to any one of claims 1 to 4, which has at least one temperature sensor by means of whose temperature signal the temperature profile can be controlled.

6. Deep fryer according to any one of claims 1 to 5, comprising sensors with which the amount of fried food and/or the temperature drop when the fried food is introduced can be determined and the values can be used to control the resistance heater (9).

7. Deep fryer according to one of claims 1 to 6, in which the side walls (3a, 3b) and the longitudinal side walls (7a, 7b) are made of stainless steel in such a way that they form flanges (11) in the region of the bottom wall (5), to which the glass ceramic plate (8) can be fastened together with the resistance heater (9), wherein a heat-resistant seal (12) is arranged between the flanges (11) and the glass ceramic plate (8).

8. Deep fryer according to any of the previous claims, wherein the glass ceramic plate (8) is screwed, clamped or glued to the flanges (11) of the side walls (3a, 3b) and the longitudinal side walls (7a, 7b).

9. Deep fryer according to any one of the preceding claims, wherein a drain (13) of the frying basin (2) is arranged centrally or laterally in the cold oil zone (4) or laterally on a side wall (3a, 3b) adjacent to the cold oil zone (4), the bottom surface (14) of the cold oil zone (4) being inclined towards the drain (13).

10. Deep fryer according to claim 9, wherein a sieve is arranged upstream of the outlet and/or a filter element (16) is arranged downstream of the outlet (13).

11. Deep fryer according to any one of the preceding claims, wherein the outer surface of the frying basin (2) comprises a thermal insulation.

12. A deep fryer according to any one of the preceding claims, comprising a warning signal device which emits a warning signal after a predetermined time after the fried food has been introduced.

13. Deep fryer according to one of the previous claims, which has a circulation device with a circulation pump, with which frying oil can be extracted from the frying basin (2) at predeterminable time intervals or by manual activation or continuously, permanently during operation, and the frying oil can be fed back to the frying basin via a filter element (16).

14. Deep fryer according to any one of the preceding claims, wherein the frying basin (2) is free of undercuts and/or dead zones in the vertical direction that interfere with free convection of the frying oil.

15. Deep fryer according to one of the previous claims, in which the deep fryer (1) has a control device (30) with a microprocessor and with at least one input device and one display device, with which at least the temperature profile in the glass ceramic plate (8) can be specified and controlled.

## Revendications

1. Friteuse (1) avec une cuve à frire (2) prévue pour recevoir une huile de friture et dotée de parois latérales (3a, 3b), de parois longitudinales (7a, 7b) et d'une paroi de fond (5) inclinée par rapport à l'horizontale vers une zone d'huile froide (4) de telle sorte que la zone d'huile froide (4) forme le point le plus bas dans la cuve à frire (2) et est disposée sur un côté de manoeuvre (6) de la friteuse (1), ledit côté de manoeuvre (6) étant disposé sur un côté étroit de la friteuse (1), **caractérisée en ce que**
l'inclinaison de la paroi de fond (5) par rapport à l'horizontale n'est pas supérieure à 10° et **en ce que** la paroi de fond (5) est formée essentiellement d'une plaque en vitrocéramique (8) qui peut être chauffée au moyen d'un chauffage par résistance électrique (9) sur toute l'étendue pouvant générer une courbe de température dans la plaque en vitrocéramique (8) dans le sens longitudinal (10) de la cuve à frire (2) de sorte que la température dans la plaque en vitrocéramique (8) augmente avec la distance par rapport à la zone d'huile froide (4) lorsque le chauffage par résistance (9) fonctionne.

2. Friteuse selon la revendication 1, dans laquelle la courbe de température est essentiellement linéaire.

3. Friteuse selon la revendication 1, dans laquelle la courbe de température évolue essentiellement par paliers, les différents paliers de température étant réguliers ou augmentant en même temps que la distance par rapport à la zone d'huile froide (4).

4. Friteuse selon l'une des revendications 1 à 3, dans laquelle le chauffage par résistance électrique (9) présente plusieurs zones de chauffe dont la puissance de chauffe peut être commandée séparément.

5. Friteuse selon l'une des revendications 1 à 4, présentant au moins un capteur de température dont le signal de température permet de commander la courbe de température.

6. Friteuse selon l'une des revendications 1 à 5, comportant des capteurs permettant de déterminer la quantité d'aliments à frire et/ou la baisse de température lors de l'introduction des aliments à frire et d'utiliser ces valeurs pour commander le chauffage par résistance (9).

7. Friteuse selon l'une des revendications 1 à 6, dans laquelle les parois latérales (3a, 3b) et les parois longitudinales (7a, 7b) en acier inoxydable sont conçues de telle sorte qu'elles forment, dans la zone de la paroi de fond (5), des flancs (11) sur lesquels la plaque vitrocéramique (8) peut être fixée en même temps que le chauffage par résistance (9), un joint d'étanchéité (12) thermorésistant étant disposé entre les flancs (11) et la plaque vitrocéramique (8).

8. Friteuse selon l'une des revendications précédentes, dans laquelle la plaque vitrocéramique (8) est vissée, bloquée par serrage ou collée aux flancs (11) des parois latérales (3a, 3b) et des parois longitudinales (7a, 7b).

9. Friteuse selon l'une des revendications précédentes, dans laquelle un conduit d'écoulement (13) de la cuve à frire (2) est disposé au centre ou latéralement dans la zone d'huile froide (4) ou à côté d'une paroi latérale (3a, 3b) adjacente à la zone d'huile froide (4), le fond (14) de la zone d'huile froide (4) étant incliné vers le conduit d'écoulement (13).

10. Friteuse selon la revendication 9, dans laquelle est disposé un tamis en amont du conduit d'écoulement et/ou un élément filtrant (16) en aval du conduit d'écoulement (13).

11. Friteuse selon l'une des revendications précédentes, dans laquelle la face externe de la cuve à frire (2) possède une isolation thermique.

12. Friteuse selon l'une des revendications précédentes, qui comporte un dispositif d'avertissement sonore émettant un signal d'avertissement à expiration d'une durée prédéterminée après introduction de l'aliment à frire.

13. Friteuse selon l'une des revendications précédentes, comportant un système de circulation dotée d'une pompe de circulation, avec laquelle l'huile de friture peut être aspirée de la cuve à frire (2) à des intervalles de temps prédéfinissables ou par déclenchement manuel ou en continu pendant le fonctionnement et avec laquelle l'huile de friture peut être réacheminée vers la cuve à frire via un élément filtrant (16).

14. Friteuse selon l'une des revendications précédentes, dans laquelle la cuve à frire (2) est dépourvue, dans le sens vertical, de contre-dépouilles et/ou de zones mortes entravant la convection naturelle de l'huile de friture.

15. Friteuse selon l'une des revendications précédentes, ladite friteuse (1) présentant un dispositif de commande (30) doté d'un microprocesseur ainsi que d'au moins un dispositif de saisie et un dispositif d'affichage, au moyen duquel à tout le moins la courbe de température dans la plaque vitrocéramique (8) peut être prédéfinie et commandée.
